Europäisches Patentamt

European Patent Office

Office européen des brevets

(11) Veröffentlichungsnummer: **0 258 568**
**A1**

(12) **EUROPÄISCHE PATENTANMELDUNG**

(21) Anmeldenummer: 87109588.1

(22) Anmeldetag: 03.07.87

(51) Int. Cl.4: **B65G 39/09**

(30) Priorität: 16.08.86 DE 8622075 U

(43) Veröffentlichungstag der Anmeldung:
09.03.88 Patentblatt 88/10

(84) Benannte Vertragsstaaten:
BE DE ES FR GB LU NL

(71) Anmelder: Gebrüder Oesterling KG
Postfach 2069
D-4322 Sprockhövel 2(DE)

(72) Erfinder: Oesterling, Walter
Langenbruchstrasse 3
D-4322 Sprockhövel 2(DE)

(74) Vertreter: Dipl.-Ing. H. Marsch Dipl.-Ing. K.
Sparing Dipl.-Phys.Dr. W.H. Röhl
Patentanwälte
Rethelstrasse 123
D-4000 Düsseldorf(DE)

(54) **Tragrolle für einen Gurtförderer.**

(57) Gegenstand der Erfindung ist eine Tragrolle für einen Gurtförderer, bestehend aus einem hohlzylindrischen Rollenmantel (1), der an beiden Enden mit je einem Rollenboden (2) verbunden ist, und einer stationär abstützbaren Achse (12), auf der die Rollenböden (2) mittels schmiermittelgefüllter und -abgedichteter Kugellager gelagert sind. Zwecks Rationalisierung der Fertigung ist vorgesehen, daß jeder Rollenboden (2) mit dem Kugellager und mit Dichtungsgarnituren (7, 10) eine vormontierte Baugruppe mit einer geschlossenen Schmiermittelkammer bildet.

EP 0 258 568 A1

## Tragrolle für einen Gurtförderer

Die Erfindung betrifft eine Tragrolle für einen Gurtförderer mit den im Oberbegriff des Anspruchs 1 genannten Merkmalen. Eine solche Tragrolle ist aus der DE-AS 22 17 062 bekannt.

Bei der bekannten Tragrolle werden zunächst die Kugellager vor inneren Dichtringen auf der Achse montiert. Danach erfolgt die Schmiermittelfüllung, und es wird ein weiches Element einer Labyrinthdichtung aufgeschoben. Das Gegenelement ist an den Rollenboden angeformt, der dann auf die Achse gesetzt und zugleich in den Mantel eingepreßt wird.

Bei anderen bekannten Konstruktionen (FR-PS 843 732, BE-PS 518 680) ist im Innern der Tragrolle ein größeres Reservoir für Schmiermittel vorgesehen, das bei der Montage verschlossen wird. Bei einer marktgängigen Tragrolle (Fabrikat Krupp) schließlich ist eine von Dichtungen begrenzte Schmiermittelkammer vorgesehen, die jedoch ebenfalls erst dann geschlossen ist, wenn das Lager auf der Achse montiert ist, so daß es auch erst dann mit Schmiermittel versorgt werden kann.

Aufgabe der Erfindung ist es, eine Tragrolle der eingangs genannten Art zu schaffen, deren Herstellung besonders rationell erfolgen kann. - Diese Aufgabe wird gemäß der Erfindung durch das im Anspruch 1 definierte Konzept gelöst; die Unteransprüche beziehen sich auf bevorzugte Ausgestaltungen dieses Vorschlags.

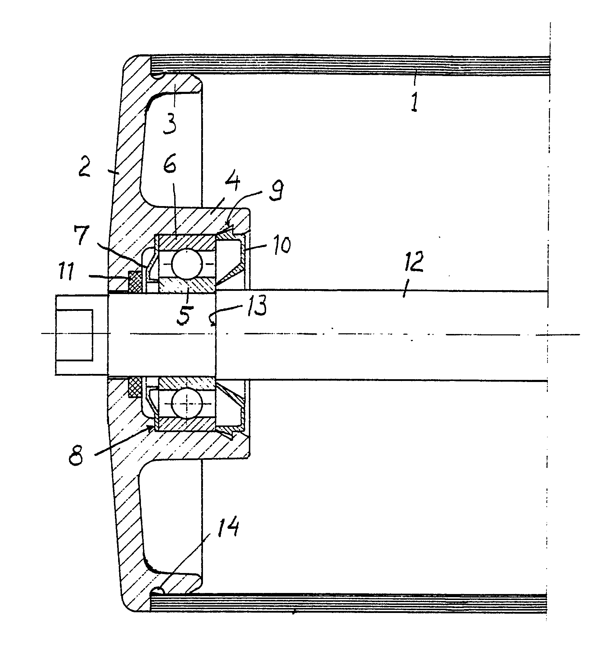

Die beigefügte Zeichnung stellt im Radialschnitt ein Ende einer erfindungsgemäßen Tragrolle dar. Sie umfaßt den Rollenmantel 1, der mit seinen Enden an Rollenböden befestigt ist, z.B. aufgeschrumpft ist; die Zeichnung läßt einen Rollenboden 2 erkennen. Der Rollenboden 2 ist außen leicht konisch, damit hereinfallende Partikel leichter ausgeschleudert werden, und weist auf seiner Innenseite einen äußeren Flansch 3 auf, der den Mantel 1 abstützt, sowie einen inneren Flansch 4. Dieser nimmt das Kugellager mit Innenring 5 und Außenring 6 sowie die Dichtungsgarnituren auf. Ein innerer Dichtring 7 ist mit seinem Radialabschnitt zwischen einer Stufe 8 des Rollenbodens und dem Außenring 6 des Kugellagers eingeklemmt und liegt mit einem axialen Bund am Innenring 5 des Lagers an. In eine Innennut 9 des Flansches 4 ist ein zweiter Dichtring 10 eingesprengt, der mit seiner Dichtlippe auf der anderen Seite des Kugellager-Innenrings 5 abdichtend anliegt. Bevor das Lager im Rollenboden eingesetzt worden ist, wurde noch eine schmutz-und wasserabweisende Dichtung 11 in eine Ausdrehung des Rollenbodens eingelegt.

Vor dem Aufschieben des Rollenbodens auf die stationär gehaltene Achse 12 wird die Kammer, begrenzt von den Kugellagerringen und den Dichtringen, mit Schmiermittel gefüllt. Beim Aufschieben auf die Achse 12 legt sich der Kugellagerinnenring 5 an einen Bund 13 der Achse an und wird dort gehalten, sobald die Verbindung zwischen Rollenmantel und Rollenböden hergestellt ist.

Die Tragrolle gemäß der Erfindung hat einen sehr einfachen Aufbau; so ist nur die eine Stufe 13 an der Achse vorzusehen, und das Lager kann fertig geschmiert aufgeschoben werden. In erwünschter Weise wird der Rollenmantel möglichst weit außen abgestützt, so daß Biegeverformungen der Achse klein sind.

Man erkennt in der Zeichnung auch, daß der Flansch 3 eine Eindrehung 14 aufweist, in die das Ende des Rollenmantels 1 eingewalzt sein kann; dies erlaubt, die Axialerstreckung des Flansches kurz zu wählen und damit Material zu sparen.

### Ansprüche

1. Tragrolle für einen Gurtförderer, bestehend aus einem hohlzylindrischen Rollenmantel, der an beiden Enden mit je einem Rollenboden verbunden ist, und einer stationär abstützbaren Achse, auf der die Rollenböden mittels schmiermittelgefüllter und -abgedichteter Kugellager gelagert sind, **dadurch gekennzeichnet,** daß jeder Rollenboden mit dem Kugellager und mit Dichtungsgarnituren eine vormontierte Baugruppe mit einer geschlossenen Schmiermittelkammer bildet.

2. Tragrolle nach Anspruch 1, dadurch gekennzeichnet, daß die Baugruppe zusätzlich eine Schmutzdichtung umfaßt, die zwischen der Schmiermittelkammer und der Außenseite des Rollenbodens angeordnet ist.

3. Tragrolle nach Anspruch 1 oder 2, dadurch gekennzeichnet, daß die Schmiermittelkammer von Dichtringen begrenzt ist, die mit Dichtlippen am Kugellagerinnenring anliegen.

4. Tragrolle nach Anspruch 3, dadurch gekennzeichnet, daß einer der Dichtringe vom Außenring des Kugellagers gegen eine Schulter des Rollenbodens klemmend gehalten ist und der andere Dichtring in eine Innennut des Rollenbodens eingesprengt ist.

**Europäisches Patentamt**

**EUROPÄISCHER RECHERCHENBERICHT**

Nummer der Anmeldung

## EINSCHLÄGIGE DOKUMENTE

EP 87109588.1

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 4) |
|---|---|---|---|
| X | US - A - 4 267 920 (OLSCHEWSKI)<br>* Fig. 1; Spalte 1, Zeilen 48-54, 68; Spalte 3, Zeilen 21-26 * | 1,2 | B 65 G 39/09 |
| Y | | 3,4 | |
| | -- | | |
| Y | DE - A1 - 2 619 335 (ERBÖ)<br>* Fig. * | 1-4 | |
| | -- | | |
| D,Y | DE - B2 - 2 217 062 (SCHARF)<br>* Fig. 1 * | 1,3 | |
| | -- | | |
| Y | DE - B2 - 2 448 180 (TEXTRON)<br>* Fig. 1; Spalte 3, Zeilen 6-12 * | 1,3 | |
| | -- | | **RECHERCHIERTE SACHGEBIETE (Int. Cl 4)** |
| A | FR - E - 91 632 (PRECISMECA)<br>* Fig. * | 1,2 | |
| | -- | | B 65 G |
| A | DE - A1 - 2 800 562 (ERBÖ)<br>* Fig. * | 1,4 | |
| | ---- | | |

Der vorliegende Recherchenbericht wurde für alle Patentansprüche erstellt.

| Recherchenort | Abschlußdatum der Recherche | Prüfer |
|---|---|---|
| WIEN | 03-11-1987 | BAUMGARTNER |